# EUROPÄISCHE PATENTSCHRIFT

(11) **EP 3 303 849 B1**
(45) Veröffentlichungstag und Bekanntmachung des Hinweises auf die Patenterteilung: **18.12.2019**
(21) Anmeldenummer: 16723684.3
(22) Anmeldetag: 03.05.2016
(51) Int. Cl.: F04D 27/02, F04D 29/42, F04D 29/44

(54) **VERDICHTER, ABGASTURBOLADER UND BRENNKRAFTMASCHINE**
COMPRESSOR, EXHAUST-GAS TURBOCHARGER AND INTERNAL COMBUSTION ENGINE
COMPRESSEUR, TURBOCOMPRESSEUR À GAZ D'ÉCHAPPEMENT ET MOTEUR À COMBUSTION INTERNE

(30) Priorität: 27.05.2015 DE 102015209666
(43) Veröffentlichungstag der Anmeldung: 11.04.2018
(73) Patentinhaber: Volkswagen Aktiengesellschaft, 38440 Wolfsburg (DE)
(72) Erfinder: PUZIK, Alois, 38110 Braunschweig (DE); MEIER, Thomas, 38547 Allenbüttel (DE); LEHMANN, Thilo, 10249 Berlin (DE)
(86) Internationale Anmeldenummer: PCT/EP2016/059847
(87) Internationale Veröffentlichungsnummer: WO 2016/188712

(56) Entgegenhaltungen:
- WO-A1-2013/074503
- CN-A- 103 148 021
- DE-A1-102009 046 522
- DE-T5-112009 002 683
- US-A1- 2002 071 765
- US-A1- 2011 173 975

## Beschreibung

Die Erfindung betrifft einen Verdichter für eine Brennkraftmaschine. Die Erfindung betrifft weiterhin einen Abgasturbolader und eine Brennkraftmaschine, jeweils mit einem Verdichter.

Die Verwendung eines oder mehrerer Verdichter zur Erhöhung der spezifischen Leistung und zur Senkung des spezifischen Kraftstoffverbrauchs von Brennkraftmaschinen ist bekannt. Die Verdichter sind dabei zumeist als Teil von Abgasturboladern ausgebildet.

Verdichter für PKW-Anwendungen werden üblicherweise als Turboverdichter ausgeführt, da mit diesen im Vergleich zu Verdrängerverdichtern hohe Volumenströme gefördert werden können und die mit diesen erzeugbaren, vergleichsweise geringen Verdichtungsenddrücke für die meisten PKW-Anwendungen ausreichend sind. Als Turboverdichter weisen diese ein Verdichterlaufrad auf, das innerhalb eines von einem Verdichtergehäuse ausgebildeten Strömungsraums angeordnet ist, wodurch der Strömungsraum in einen stromauf des Verdichterlaufrads gelegenen Niederdruckraum und einen stromab des Verdichterlaufrads gelegenen Hochdruckraum unterteilt wird.

Ein Problem, dass sich aus der Ausgestaltung von Verdichtern in Form von Turboverdichten ergibt, ist die Möglichkeit einer Rückströmung von bereits verdichtetem Frischgas durch die nur unvollständige Separierung des Hochdruck- und des Niederdruckraums voneinander. Dies kann sich insbesondere dann als problematisch zeigen, wenn sich auf der Hochdruckseite des Frischgasstrangs, der sogenannten Ladeluftstrecke, temporär ein ungewöhnlich großer Überdruck einstellt, wie dies beispielsweise der Fall sein kann, wenn eine in die Ladeluftstrecke integrierte Drosselklappe, die zuvor weit geöffnet war, schnell geschlossen wird. Die Trägheit des Systems "Brennkraftmaschine" kann dann dazu führen, dass der Verdichter noch weiter mit gegebenenfalls hoher Verdichtungsleistung in die bereits durch die geschlossene Drosselklappe unterbrochene Ladeluftstrecke fördert, was zu einem entsprechend hohen Verdichtungsenddruck und einer entsprechend hohen Druckdifferenz der Gasdrücke im Hochdruckraum sowie im Niederdruckraum des Verdichters führt.

Eine Rückströmung von bereits verdichtetem Frischgas über das Verdichterlaufrad in den Niederdruckraum des Verdichters kann sich wellenförmig ausbreiten, was zu einer entsprechenden Schwingungsanregung des Verdichtergehäuses und insbesondere eines an einen Verdichtereinlass angeschlossenen Gasführungsrohrs des Frischgasstrangs führen kann. Die mit dieser Schwingungsanregung verbundene Geräuschentwicklung wird vielfach auch als "Entlastungsfauchen" bezeichnet.

Ein solches Entlastungsfauchen kann durch die Integration eines Schubumluftventils in einen Verdichter oder die Ladeluftstrecke des Frischgasstrangs vermieden werden, wobei ein solches Schubumluftventil ein Rückströmen durch das Verdichterlaufrad verhindert. Die damit verbundenen Kosten sind jedoch relativ hoch. Weiterhin kann eine Integration schalldämmender Elemente in den dem Verdichtereinlass stromauf gelegenen Abschnitt des Frischgasstrangs vorgesehen sein, die die Auswirkungen der Schwingungsanregung und damit das Entlastungsfauchen verringern. Dies ist aber ebenfalls mit relativ hohen Kosten verbunden. Zudem erfordert diese Maßnahme einen relativ großen Bauraum.

Aus der DE 10 2007 019 884 A1 ist ein Verdichter für einen Abgasturbolader bekannt, dessen Verdichtergehäuse im Bereich des Einlassstutzens innenseitig radial umlaufende Vertiefungen aufweist, durch die Strömungsgeräusche im Normalbetrieb des Verdichters und akustische Auswirkungen im Pumpfall reduziert werden sollen. Dabei sollen die radial umlaufenden Vertiefungen Hinterschnitte entgegen der Strömungsrichtung des Gases aufweisen. Im Pumpfall soll das rückströmende Frischgas in die Hinterschnitte gelangen, wo dieses entlang des Umfangs rotiert, was zu einem insgesamt größeren Rückströmungswiderstand führen soll, der das Pumpen in Dauer und Amplitude abschwächen soll.

Weiterhin ist aus der DE 10 2014 018 035 A1 eine Luftleitung für einen Ansaugtrakt einer Brennkraftmaschine bekannt, die in einem ersten Anschlussbereich mit einem Luftmassenmesser verbindbar ist und in einem zweiten Anschlussbereich für einen Anschluss an einen Verdichter eines Abgasturboladers vorgesehen ist. In einem Abschnitt zwischen diesen Anschlussbereichen ist eine Anschlussstelle für die Verbindung mit einer Kurbelgehäuseentlüftung der Brennkraftmaschine vorgesehen. In einem Abschnitt zwischen dem zweiten Anschlussbereich und der Anschlussstelle bildet die Luftleitung an ihrer Innenseite eine Mehrzahl von sich radial nach innen erstreckenden und im Wesentlichen parallel zu der Längsrichtung der Luftleitung verlaufende Leitrippen aus, die eine von dem Verdichter zurückströmende Drallströmung stören und damit eine Beaufschlagung des Luftmassenmessers durch Öl, das über die Kurbelgehäuseentlüftung in die Luftleitung eingetragen wurde, verringern soll.

Die DE 10 2010 026 176 A1 offenbart einen Verdichter mit einem in einem Ansaugabschnitt eines Gehäuses des Verdichters angeordneten Konus, dessen Innendurchmesser mittels eines zuzuführenden Druckfluids veränderbar ist, um zeitweise eine mehr oder weniger große Überdeckung des Eintrittsquerschnitts des Verdichterlaufrads zu bewirken. Dadurch soll das Verdichterkennfeld, innerhalb dessen der Verdichter stabil betreibbar ist, erweitert werden können.

Dazu vergleichbare Verdichter sind auch aus der FR 2 434 939 A1 und der WO 2014/128 931 A1 bekannt, wobei dort anstelle eines veränderbaren Konus ringförmige Sperrelemente, die hinsichtlich ihres radialen Innendurchmessers veränderbar sind, zum Einsatz kommen.

Aus der DE 10 2011 017 419 A1 ist ein Radialverdichter für eine Brennkraftmaschine bekannt, bei der aus dem umlaufenden Spalt zwischen dem Verdichterlaufrad und dem angrenzenden Abschnitt des Verdichtergehäuses eine Entlastungsleitung abgeht, die stromauf des Verdichterlaufrads in einen Ansaugabschnitt des Verdichtergehäuses mündet.

Dazu vergleichbare Verdichter sind auch aus der JP 2012-184751 A, der WO 2015/066301 A1 und der US 2007/0266705 A1 bekannt, wobei bei dem Verdichter gemäß der JP 2012-184751 A im Bereich der Mündung der Entlastungsleitung in gelichmäßiger Teilung entlang der Innenseite des Ansaugabschnitts verteilt eine Mehrzahl von plattenförmigen Elementen in spiralförmiger Ausrichtung vorgesehen sind.

Aus der WO 2014/170954 A1 ist weiterhin ein Verdichter für eine Brennkraftmaschine bekannt, bei dem das Verdichtergehäuse im Bereich eines Ansaugabschnitts einen ringförmig umlaufenden Kanal ausbildet, der in einem Abschnitt mit dem Ansaugabschnitt verbunden ist und in den eine Abgasrückführleitung mündet.

Die DE 10 2009 046 522 A1 offenbart einen Verdichter mit einer als "Strömungsmanagementvorrichtung" bezeichneten Vorrichtung, die mehrere schräg in einen Einlasskanal des Verdichters ragenden Flügel umfasst, die der Erzeugung eines Vordralls der Gasströmung, die dem Verdichterlaufrad ("Pumpenelement") 36a zugeführt werden soll, dienen.

Ausgehend von diesem Stand der Technik lag der Erfindung die Aufgabe zugrunde, ein Entlastungsfauchen bei einem Verdichter für eine Brennkraftmaschine mit möglichst einfachen Mitteln so gut wie möglich zu reduzieren.

Diese Aufgabe wird mittels eines Verdichters gemäß dem Patentanspruch 1 gelöst. Ein Abgasturbolader und eine Brennkraftmaschine, jeweils mit einem solchen Verdichter, sind Gegenstände der Patentansprüche 11 und 12. Vorteilhafte Ausgestaltungen des erfindungsgemäßen Verdichters und damit des erfindungsgemäßen Abgasturbolader und der erfindungsgemäßen Brennkraftmaschine sind Gegenstände der weiteren Patentansprüche und/oder ergeben sich aus der nachfolgenden Beschreibung der Erfindung.

Der Erfindung liegt die Erkenntnis zugrunde, dass ein Rückströmen von bereits verdichtetem Frischgas über das Verdichterlaufrad eines in den Frischgasstrang integrierten Verdichters, dass durch ein relativ schnelles Schließen einer in der Ladeluftstrecke eines Frischgasstrangs einer Brennkraftmaschine angeordneten Drosselklappe bedingt ist, in Form einer wandnahen Drallströmung erfolgt. Die Rückströmung erfolgt somit spiralförmig entlang der Innenwand des Niederdruckraums und diese setzt sich in dieser Form bis in ein stromauf (bezogen auf die Betriebsströmungsrichtung des zu verdichtenden Gases, bei der dieses von der Niederdruckseite zu der Hochdruckseite des Verdichters beziehungsweise des Frischgasstrangs strömt) an den Verdichtereinlass angeschlossenes Gasführungsrohr fort. Dies führt nicht nur zu einer Luftschallabstrahlung über die Ansaugmündung sondern auch zu einer Schwingungsanregung von insbesondere den den Ansaugabschnitt des Frischgasstrangs ausbildenden Gasführungsrohren, teilweise im Bereich ihrer Eigenfrequenzen. Alles zusammen führt zu der als Entlastungsfauchen bezeichneten, unerwünschten Geräuschentwicklung.

Basierend auf dieser Erkenntnis liegt der Erfindung der Gedanke zu Grunde, dass die Ausbreitung dieser wandnahen Drallströmung und insbesondere das Überströmen in ein sich stromauf an den Verdichtereinlass anschließendes Gasführungsrohr auf konstruktiv einfache Weise dadurch reduziert beziehungsweise gestört werden kann, dass in den Ansaugabschnitt des Verdichters ein Strömungswiderstand in Form eines geeignet ausgebildeten Absatzes integriert wird. Da das Gas in Form einer sowohl eine Strömungskomponente in Längsrichtung als auch in Umfangsrichtung aufweisenden Drallströmung rückströmt, kann eine Störung dieser Rückströmung grundsätzlich sowohl mit einem Absatz erfolgen, der quer und insbesondere senkrecht zu der in Längsrichtung ausgerichteten Strömungskomponente ist, als auch mit einem Absatz, der quer zu der in Umfangsrichtung ausgerichteten Strömungskomponente liegt. Als besonders wirksam hat sich dabei ein Absatz gezeigt, der quer und insbesondere senkrecht zu der in Längsrichtung ausgerichteten Strömungskomponente der Drallströmung ausgerichtet ist.

Dementsprechend ist bei einem Verdichter für eine Brennkraftmaschine, der zumindest ein in einem Verdichtergehäuse drehbar gelagertes Verdichterlaufrad und einen in Betriebsströmungsrichtung eines zu verdichtenden Gases vor dem Verdichterlaufrad liegenden Ansaugabschnitt aufweist, erfindungsgemäß vorgesehen, dass in eine den Ansaugabschnitt begrenzende Wand zumindest ein dem Verdichterlaufrad zugewandter, mündungsfreier Umfangsabsatz integriert ist.

Dabei kann der dem Verdichterlaufrad zugewandte Umfangsabsatz beziehungsweise eine von diesem Umfangsabsatz definierte Ebene parallel oder schräg (Winkel zwischen > 0° und < 90°) zu der Eintrittsebene des Verdichterlaufrads ausgerichtet sein. Die Eintrittsebene des Verdichterlaufrads stellt dabei diejenige senkrecht zu der Rotationsachse des Verdichterlaufrads liegende Ebene dar, die den dem Niederdruckraum am nächsten gelegen Punkt des Verdichterlaufrads umfasst.

Erfindungsgemäß gekennzeichnet ist ein solcher Verdichter weiterhin dadurch, dass das Verhältnis des kürzesten Abstands zwischen dem Verdichterlaufrad und dem Umfangsabsatz einerseits und der größten Querschnittsabmessung in dem von dem Umfangsabsatz begrenzten Strömungsquerschnitt andererseits mindestens 0,5 beträgt. Dadurch kann insbesondere vermieden werden, dass der Umfangsabsatz zu einer relevanten Überdeckung des Verdichterlaufrads im Hinblick auf die Strömung des zu verdichtenden Gases führt, wodurch sich anderenfalls das Betriebsverhalten und insbesondere das Leistungsverhalten des Verdichters verschlechtern könnte.

Als "Umfangsabsatz" wird erfindungsgemäß ein Flächenabschnitt der entsprechenden Wand des Ansaugabschnitts verstanden, der quer bezüglich einer Längserstreckung des Ansaugabschnitts beziehungsweise bezüglich einer Rotationsachse des Verdichterlaufrads ausgerichtet ist, wobei vorzugsweise in dem Übergang von einer Grundfläche dieser Wand in diesen Flächenabschnitt eine Kante ausgebildet ist, so das zwischen der Grundfläche und dem Flächenabschnitt ein Winkel ausgebildet ist. Dieser (Absatz-)Winkel kann vorzugsweise zwischen 80° und 100° und besonders bevorzugt ca. 90° betragen.

Als "mündungsfrei" wird ein Umfangsabsatz dann angesehen, wenn dieser keine Begrenzung eines in die den Ansaugabschnitt ausbildende Wand mündenden Fluidkanals darstellt, wobei der Fluidkanal der Einleitung eines Fluids (Gas oder Flüssigkeit) in den Ansaugabschnitt dient. Mündungsfrei soll der Umsatzabschnitt sein, weil anderenfalls durch eine aus dem einmündenden Fluidkanal austretende Fluidströmung die störende Wirkung, die der Umfangskanal auf die Drallströmung hat, kompensiert oder zumindest verschlechtert werden kann.

Als besonders wirksam hinsichtlich einer Störung der Ausbreitung der Drallströmung hat sich gezeigt, wenn der Umfangsabsatz umlaufend, d.h. sich über einen gesamten Umfang der Wand erstreckend ausgebildet ist. Dies kann geschlossen umlaufend (d.h. ringförmig) oder offen umlaufend (d.h. spiralförmig) vorgesehen sein. Dabei kann ein umlaufender Umfangsabsatz durchgehend oder segmentiert, d.h. mit mindestens einer Unterbrechung (in dessen Bereich somit kein Umfangsabsatz ausgebildet ist), ausgebildet sein. Ein durchgehend umlaufender Umfangsabsatz, der auch eine variierende Absatzhöhe über dem Umfangsverlauf aufweisen kann, kann sich als besonders wirksam hinsichtlich einer Störung der Ausbreitung der rückströmenden Drallströmung zeigen, während durch einen segmentierten Umfangsabsatz andere Vorteile realisiert werden können, wie beispielsweise eine gezielte Beeinflussung einer Strömung des Frischgases in der Betriebsströmungsrichtung, d.h. im Ansaugabschnitt in einer Richtung auf das Verdichterlaufrad zu. Für eine ausreichende Störungswirkung eines segmentierten Umfangsabsatzes ist vorgesehen, dass die Umfangslänge aller Segmente mindestens 50%, 60%, 70%, 80% oder 90% des entsprechenden Gesamtumfangs innerhalb des Ansaugabschnitts beträgt.

Da mittels des Umfangsabsatzes nach Möglichkeit lediglich die rückströmende Drallströmung gestört werden soll, kann vorzugsweise vorgesehen sein, dass ein Übergang von dem Umfangsabsatz in den von dem Verdichterlaufrad abgewandten Abschnitt der Wand absatzfrei und weiterhin bevorzugt kontinuierlich, beispielsweise konisch aufweitend ausgebildet ist. Durch diese Ausgestaltung kann insbesondere eine negative Beeinflussung einer Strömung des Frischgases in der Betriebsströmungsrichtung vermieden werden.
In einer bevorzugten Ausgestaltung eines erfindungsgemäßen Verdichters kann vorzugsweise zusätzlich ein senkrecht zu einer Eintrittsebene des Verdichterlaufrads ausgerichteter (vorzugsweise ebenfalls mündungsfreier) Längsabsatz vorgesehen sein, durch den insbesondere eine Störung der in Umfangsrichtung ausgerichteten Strömungskomponente der rückströmenden Drallströmung erreicht werden kann. Gleichzeitig kann sich ein solcher Längsabsatz durch eine nur geringe Beeinflussung der zu dem Verdichterlaufrad strömenden, zu verdichtenden Gasströmung führen. Eine Kombination eines Umfangsabsatzes mit einem Längsabsatz kann in vorteilhafter Weise zu einer wirksamen Unterdrückung der rückströmenden Drallströmung auch dann führen, wenn der Umfangsabsatz relativ klein, d.h. insbesondere mit einer relativ geringen Absatzhöhe, ausgebildet ist, so dass auch dessen Wirkung auf die in Betriebsströmungsrichtung strömende Gasströmung gering sein kann.

Vorzugsweise kann vorgesehen sein, dass ein Längsabsatz von einem beispielsweise radial bezüglich einer Längsachse des Ansaugabschnitts in diesen ragenden, rippenförmigen Steg ausgebildet wird.

Ein solcher Steg kann auch mit einem bogenförmigen oder abgewinkelten Längsverlauf ausgebildet sein, wodurch dieser in einem Bauteil einen Umfangsabsatz und einen Längsabsatz kombinieren kann. Es besteht auch die Möglichkeit, ausschließlich einen Umfangsabsatz mittels eines solchen nicht parallel zu der Längsachse des Ansaugabschnitts verlaufenden Stegs auszubilden.

Der Umfangsabsatz und/oder der Längsabsatz kann/können vorteilhafterweise in einem von dem Verdichtergehäuse ausgebildeten Ansaugstutzen oder in einem an den Ansaugstutzen angeschlossenen Gasführungsrohr angeordnet sein. Der Ansaugstutzen, das Gasführungsrohr (oder ein Abschnitt davon) und ggf. ein den Umfangsabsatz und/oder den Längsabsatz ausbildendes Absatzbauteil können dabei den Ansaugabschnitt des erfindungsgemäßen Verdichters ausbilden. Ebenfalls kann es vorteilhaft möglich sein, den Umfangsabsatz in einem Übergang zwischen dem Ansaugstutzen und dem Gasführungsrohr anzuordnen oder den Umfangsabsatz von diesem Übergang ausbilden zu lassen. Hierzu kann beispielsweise vorgesehen sein, dass das Gasführungsrohr im Bereich des Übergangs eine kleinere Öffnungsquerschnittsfläche als der Ansaugstutzen des Verdichtergehäuses aufweist.

Der Umfangsabsatz und/oder den Längsabsatz kann/können vorteilhafterweise in der entsprechenden Wand des Ansaugabschnitts (insbesondere einstückig) integral ausgebildet sein. Auf diese Weise kann ein durch die Integration des Umfangsabsatzes und/oder des Längsabsatzes bedingter Zusatzaufwand bei der Montage des Verdichters beziehungsweise eines den Verdichter integrierenden Frischgasstrangs einer Brennkraftmaschine vermieden werden. Andererseits kann eine solche integrale Ausgestaltung des Umfangsabsatzes und/oder des Längsabsatzes in der Wand des Ansaugabschnitts mit höheren Herstellungskosten für das entsprechende Bauteil (Verdichtergehäuse oder Gasführungsrohr) einhergehen, so dass gegebenenfalls vorteilhafter sein kann, den Umfangsabsatz und/oder des Längsabsatzes von einem separaten ein- oder mehrteiligen Absatzbauteil ausbilden zu lassen. Dabei kann dieses Absatzbauteil vorteilhafterweise in dem Übergang zwischen dem Ansaugstutzen und dem Gasführungsrohr fixiert angeordnet sein. Ebenso kann vorgesehen sein, das Absatzbauteil in beispielsweise einer Umfangsnut in der Wand des Ansaugabschnitts fixiert (zumindest bezüglich der Längsrichtung des Ansaugabschnitts) anzuordnen.

In einer weiterhin bevorzugten Ausgestaltung eines solchen erfindungsgemäßen Verdichters kann vorgesehen sein, dass das Absatzbauteil (zumindest teilweise) aus einem elastischen Werkstoff ausgebildet ist. Dabei wird unter "elastischem Werkstoff' ein Werkstoff verstanden, dessen Elastizität so bemessen ist, dass sich das Absatzbauteil infolge einer Beaufschlagung mit einer Strömung des Frischgases, sei es in Betriebsströmungsrichtung oder entgegengesetzt (und somit insbesondere in Form der zu störenden Drallströmung) funktional in einem relevanten Ausmaß verformt. Mittels eines solchen elastischen Absatzbauteils kann eine positive Beeinflussung einer Strömung des zu verdichtenden Gases erreicht oder zumindest eine negative Beeinflussung dieser Strömung durch insbesondere den Umfangsabsatz möglichst gering gehalten werden.

Dazu kann insbesondere vorgesehen sein, dass das Absatzbauteil derart ausgebildet ist, dass der von dem Umfangsabsatz begrenzte Strömungsquerschnitt bei einer Beaufschlagung mit dem Gas in Betriebsströmungsrichtung aufweitbar ist. In der entgegengesetzten Strömungsrichtung und somit insbesondere bei einer Beaufschlagung des Umfangsabsatzes mit der zu störenden Drallströmung kann dagegen vorgesehen sein, dass sich die Form und insbesondere die Größe des Amfangsabsatzes im Vergleich zu einer unbelasteten Neutralstellung nicht verändert oder gegebenenfalls sogar vergrößert. Auf diese Weise kann erreicht werden, dass der von dem Umfangsabsatz freigegebene Strömungsquerschnitt bei einer Strömung des zu verdichtenden Gases in Betriebsströmungsrichtung (und insbesondere solange dieser nicht von einer zu störenden Drallströmung beaufschlagt ist) möglichst groß ist, während sich dieser infolge einer elastischen Deformation des den Umfangsabsatz ausbildenden Bauteils verengt, sobald dieser von der zu störenden Drallströmung beaufschlagt wird. Eine konstruktiv einfache Ausgestaltung eines solchen Absatzbauteils kann vorsehen, dass dieses in zumindest einem Abschnitt in Form eines sich trichterförmig in Richtung des Verdichterlaufrads verjüngenden Rings ausgebildet ist, somit ein Winkel zwischen dem dem Verdichterlaufrad zugewandten und an den Ring angrenzenden Abschnitt der Wand des Ansaugabschnitts und der den Umfangsabsatz ausbildenden Fläche des Rings kleiner 90° ist.

Für eine besonders wirkungsvolle Störung der rückströmenden Drallströmung kann vorzugsweise vorgesehen sein, dass das Verhältnis des kürzesten Abstands zwischen dem Verdichterlaufrad und dem Umfangsabsatz und/oder dem Längsabsatz einerseits und der größten Querschnittsabmessung in dem von dem Umfangsabsatz und/oder dem Längsabsatz begrenzten Strömungsquerschnitt (und insbesondere dem Innendurchmesser bei einem kreisförmigen Strömungsquerschnitt) andererseits zwischen 0,5 und 2,0, vorzugsweise zwischen 0,5 und 1,5, weiterhin bevorzugt zwischen 0,8 und 1,2 und besonders bevorzugt in etwa 1 beträgt. Besonders bevorzugt kann ein solches Verhältnis für den Umfangsabsatz vorgesehen sein, während sich ein Längsabsatz bis näher, ggf. bis unmittelbar an das Verdichterlaufrad heran erstrecken kann.

Beispielsweise kann vorteilhafterweise vorgesehen sein, dass der kürzeste Abstand zwischen dem Verdichterlaufrad und (insbesondere) dem Umfangsabsatz und/oder dem Längsabsatz maximal 70 mm, vorzugsweise maximal 20 mm beträgt.

Weiterhin bevorzugt kann vorgesehen sein, dass das Verhältnis der Absatzhöhe (gegebenenfalls der größten Absatzhöhe bei einem Umfangsabsatz oder Längsabsatz mit unkonstanter Absatzhöhe) zu der größten Querschnittsabmessung in dem von dem Umfangsabsatz und/oder dem Längsabsatz begrenzten Strömungsquerschnitt (und insbesondere dem Innendurchmesser bei einem kreisförmigen Strömungsquerschnitt) zwischen 0,03 und 0,16, vorzugsweise zwischen 0,04 und 0,12 und besonders bevorzugt zwischen 0,05 und 0,08 beträgt.

Beispielsweise kann vorgesehen sein, dass die Absatzhöhe des Umfangsabsatzes und/oder des Längsabsatzes zwischen 1 mm und 6 mm und vorzugsweise zwischen 1,5 mm und 4,5 mm beträgt.

Als "Absatzhöhe" wird die Erstreckung des Umfangsabsatzes oder des Längsabsatzes senkrecht und insbesondere radial zur Längsachse des Ansaugabschnitts verstanden.

Gegebenenfalls kann es auch vorteilhaft sein, wenn mehrere Umfangsabsätze vorgesehen sind, die unterschiedliche kürzeste Abstände von dem Verdichterlaufrad aufweisen. Eine solche Ausgestaltung kann eine besonders ausgeprägte Störung der rückströmenden Drallströmung bewirken.

Der Verdichter kann vorzugsweise Teil eines Abgasturboladers für eine Brennkraftmaschine sein. Die Erfindung betrifft demnach weiterhin einen Abgasturbolader mit einem erfindungsgemäßen Verdichter und einer Turbine. Die Turbine kann ein Turbinengehäuse und ein innerhalb eines Strömungsraums des Turbinengehäuses angeordnetes Turbinenlaufrad umfassen, wobei das Turbinenlaufrad drehfest mit dem Verdichterlaufrad verbunden ist, was die Übertragung eines bei der Durchströmung des Turbinenlaufrads auf dieses ausgeübten Drehmoments auf das Verdichterlaufrad ermöglicht, um dieses rotierend anzutreiben, wodurch eine Verdichtung eines durch den Verdichter geführten Gases erreicht werden kann.

Der erfindungsgemäße Verdichter kann auch andersartig (als über eine Abgasturbine) antreibbar ausgebildet sein. Beispielsweise kann das Verdichterlaufrad als mittels einer Abtriebswelle eines Verbrennungsmotors einer Brennkraftmaschine antreibbar (in der Automobiltechnik vielfach als "Kompressor" bezeichnet) oder mittels eines Elektromotors antreibbar (in der Automobiltechnik vielfach als "Booster" bezeichnet) ausgebildet sein.

Weiterhin betrifft die Erfindung auch eine Brennkraftmaschine mit einem einen oder mehrere Brennräume ausbildenden Verbrennungsmotor (insbesondere Hubkolben-Verbrennungsmotor), einem Frischgasstrang, über den den Brennräumen Frischgas zuführbar ist, einem Abgasstrang, über den Abgas aus den Brennräumen abführbar ist und einem erfindungsgemäßen Verdichter oder einem erfindungsgemäßen Abgasturbolader, wobei der Verdichter in den Frischgasstrang und die Turbine des Abgasturboladers, soweit vorhanden, in den Abgasstrang integriert sind.

Der/die erfindungsgemäße Verdichter/Abgasturbolader/Brennkraftmaschine kann/können insbesondere zur Verwendung in einem Kraftfahrzeug, insbesondere einem radbasierten Kraftfahrzeug (beispielsweise PKW oder LKW), vorgesehen sein. Dabei kann die Brennkraftmaschine insbesondere zu Erzeugung einer Fahrantriebsleistung für das Kraftfahrzeug vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt jeweils schematisch:
- Fig. 1:: eine erste Ausführungsform einer Brennkraftmaschine mit einem erfindungsgemäßen Verdichter;
- Fig. 2:: eine zweite Ausführungsform einer Brennkraftmaschine mit einem erfindungsgemäßen Verdichter;
- Fig. 3:: einen Längsschnitt durch einen erfindungsgemäßen Verdichter in einer ersten Ausführungsform;
- Fig. 4:: einen Längsschnitt durch einen erfindungsgemäßen Verdichter in einer weiteren Ausführungsform;
- Fig. 5:: einen Längsschnitt durch einen erfindungsgemäßen Verdichter in einer weiteren Ausführungsform;
- Fig. 6:: eine Vorderansicht des in dem Verdichter gemäß der Fig. 5 zur Ausbildung des Umfangsabsatzes genutzten Absatzbauteils;
- Fig. 7 bis 9:: alternative Ausgestaltungen des Absatzbauteils;
- Fig. 10:: einen Längsschnitt durch einen erfindungsgemäßen Verdichter in einer weiteren Ausführungsform;
- Fig. 11:: einen Längsschnitt durch einen erfindungsgemäßen Verdichter in einer weiteren Ausführungsform;
- Fig. 12:: eine Vorderansicht des in dem Verdichter gemäß der Fig. 11 zur Ausbildung des Umfangsabsatzes genutzten Absatzbauteils;
- Fig. 13:: einen Längsschnitt durch einen erfindungsgemäßen Verdichter in einer weiteren Ausführungsform;
- Fig. 14:: eine Vorderansicht des in dem Verdichter gemäß der Fig. 13 zur Ausbildung des Umfangsabsatzes genutzten Absatzbauteils;
- Fig. 15:: eine alternative Ausgestaltung des Absatzbauteils in einem Verdichter gemäß der Fig. 14;
- Fig. 16:: in einem Längsschnitt eine weitere Ausgestaltung eines Absatzbauteils für einen erfindungsgemäßen Verdichter;
- Fig. 17:: in einem Längsschnitt eine weitere Ausgestaltung eines Absatzbauteils für einen erfindungsgemäßen Verdichter;
- Fig. 18:: einen Längsschnitt durch einen erfindungsgemäßen Verdichter in einer weiteren Ausführungsform;
- Fig. 19:: einen Querschnitt durch den Verdichter entlang der Schnittebene XIX - XIX in der Fig. 18;
- Fig. 20:: einen perspektivischen Längsschnitt durch einen Abschnitt des Ansaugstutzens des Verdichters gemäß den Fig. 18 und 19;
- Fig. 21:: eine Darstellung gemäß der Fig. 19 bei einer alternativen Ausgestaltung eines Verdichters gemäß der Fig. 18; und
- Fig. 22:: einen Längsschnitt durch einen erfindungsgemäßen Verdichter in einer weiteren Ausführungsform.

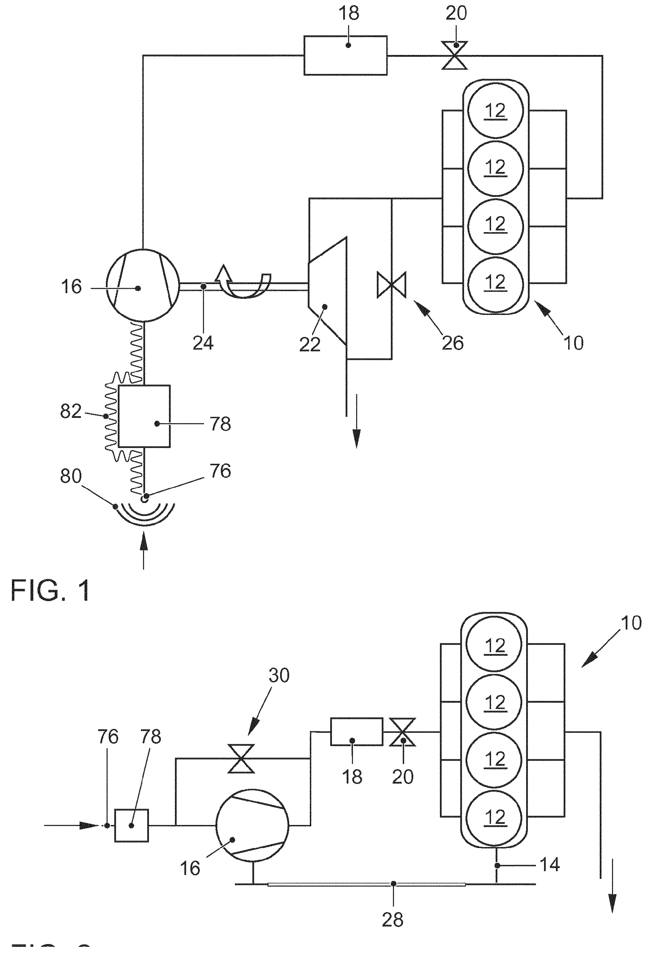

Die Fig. 1 zeigt in schematischer Darstellung eine Brennkraftmaschine mit einem Verbrennungsmotor 10, der eine Mehrzahl von Zylindern 12 ausbildet. Die Zylinder 12 begrenzen gemeinsam mit darin auf und ab geführten Kolben und einem Zylinderkopf (nicht dargestellt) Brennräume, in denen Frischgas (Luft) gemeinsam mit Kraftstoff verbrannt wird, wodurch die Kolben zyklisch auf und ab bewegt werden. Diese Bewegung der Kolben wird in bekannter Weise auf eine in der Fig. 1 nicht dargestellte Kurbelwelle 14 (vgl. Fig. 2) übertragen und diese somit rotierend angetrieben. Das Frischgas wird dem Verbrennungsmotor 10 über einen Frischgasstrang zugeführt und dazu über eine Ansaugmündung 76 aus der Umgebung angesaugt, in einem Luftfilter 78 gereinigt und anschließend in einen erfindungsgemäßen Verdichter 16, der Teil eines Abgasturboladers ist, geführt. Das Frischgas wird mittels des Verdichters 16 verdichtet, anschließend in einem Ladeluftkühler 18 abgekühlt und, gesteuert durch eine Drosselklappe 20, den Brennräumen zugeführt. Der Antrieb des Verdichters 16 erfolgt mittels einer Turbine 22, die in einen Abgasstrang der Brennkraftmaschine integriert ist. Abgas, das bei der Verbrennung des Kraftstoff-Frischgas-Gemisches in den Brennräumen des Verbrennungsmotors 10 entsteht, wird über den Abgasstrang aus dem Verbrennungsmotor 10 abgeführt und durchströmt dabei die Turbine 22. Dies führt in bekannter Weise zu einem rotierenden Antrieb eines Turbinenlaufrads, das wiederum über eine Welle 24 drehfest mit einem Verdichterlaufrad des Verdichters 16 verbunden ist. Der rotierende Antrieb des Turbinenlaufrads wird somit auf das Verdichterlaufrad übertragen. Um bei einem Betrieb des Verbrennungsmotors 10 mit hohen Drehzahlen und Lasten den Druckaufbau im Frischgasstrang zu begrenzen, ist die Turbine 22 in bekannter Weise mittels eines sogenannten Wastegates 26 umgehbar.

Bei der Brennkraftmaschine gemäß der Fig. 2 wird der in den Frischgasstrang integrierte Verdichter 16 mechanisch, d.h. von der Kurbelwelle 14 des Verbrennungsmotors 10 mittels eines Riementriebs 28 angetrieben. Da hierbei die Drehzahl des Verdichterlaufrads proportional zu der Drehzahl der Kurbelwelle 14 des Verbrennungsmotors 10 ist, besteht die Möglichkeit, den Druckaufbau mittels des Verdichters 16 bei hohen Drehzahlen der Kurbelwelle 14 mittels eines Verdichterbypasses 30 in bekannter Weise zu begrenzen.

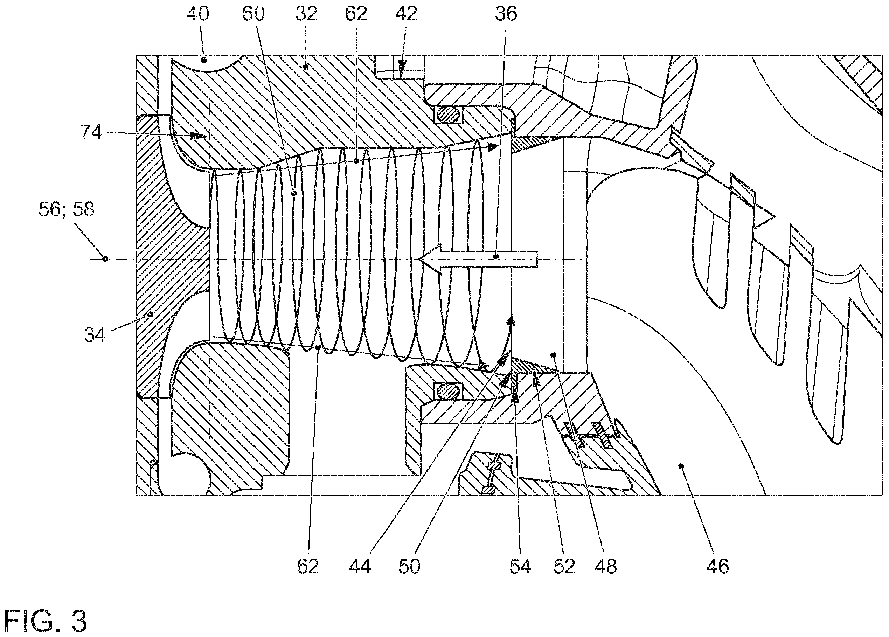

Die Fig. 3 zeigt schematisch einen Längsschnitt durch einen erfindungsgemäßen (Radial-)Verdichter 16, der beispielsweise in einer der Brennkraftmaschinen gemäß den Fig. 1 und 2 zum Einsatz kommen kann. Gezeigt ist ein Teil eines Verdichtergehäuses 32, das einen Strömungsraum ausbildet, innerhalb dessen ein Verdichterlaufrad 34 drehbar gelagert ist. Das Verdichterlaufrad 34 separiert den Strömungsraum in einen sich längsaxial stromauf (bezüglich einer Betriebsströmungsrichtung 36 des zu verdichtenden Frischgases) des Verdichterlaufrads 34 befindlichen Niederdruckraum 38 sowie einen das Verdichterlaufrad 34 radial umgebenden Hochdruckraum 40. Der Niederdruckraum 36, der in einem von dem Verdichtergehäuse 32 ausgebildeten Ansaugstutzen 42 ausgebildet ist, endet in einem Verdichtereinlass 44, während in dem Hochdruckraum 40 ein (nicht sichtbarer) Verdichterauslass ausgebildet ist. Mittels des Verdichtereinlasses 44 und des Verdichterauslasses ist das Verdichtergehäuse 32 in einen Frischgasstrang einer Brennkraftmaschine, wie sie in den Fig. 1 und 2 dargestellt ist, integrierbar.

An den Verdichtereinlass 44 schließt sich als Teil des erfindungsgemäßen Verdichters 16 ein Abschnitt eines Gasführungsrohrs 46, das ebenfalls Teil eines Frischgasstrangs einer Brennkraftmaschine sein kann, an. Der Niederdruckraum 38 beziehungsweise der Ansaugstutzen 42 des Verdichtergehäuses 32 bildet gemeinsam mit diesem Abschnitt des Gasführungsrohrs 46 und einem in dem Übergang zwischen dem Ansaugstutzen 42 und dem Gasführungsrohr 46 angeordneten Absatzbauteil 48 einen Ansaugabschnitt aus, in dessen begrenzende Wand erfindungsgemäß ein dem Verdichterlaufrad 34 zugewandter Umfangsabsatz 50 integriert ist. Dieser Umfangsabsatz 50 wird von einer Wandfläche des Absatzbauteils 48 ausgebildet. Das Absatzbauteil 48, das gegebenenfalls aus einem elastischen Material (z.B. einem Elastomer) ausgebildet sein kann, weist einen ringförmigen Wirkabschnitt 52 sowie einen sich von dem einen längsaxialen Ende des Wirkabschnitts 52 in radialer Richtung nach außen erstreckenden, ebenfalls ringförmigen Befestigungsabschnitt 54 auf. Der Wirkabschnitt 52 des Absatzbauteils 48 ist in dem den Übergang von dem Ansaugstutzen 42 des Verdichtergehäuses 32 zu dem Gasführungsrohr 46 ausbildenden Endabschnitt des Gasführungsrohrs 46 positioniert und liegt dabei mit seiner Außenseite möglichst spielfrei an der Innenseite des Gasführungsrohrs 46 an. Der Befestigungsabschnitt 54 ist dagegen innerhalb eines in dem Übergang von dem Ansaugstutzen 42 zu dem Gasführungsrohr 46 ausgebildeten Radialspalt positioniert und fixiert somit das Absatzbauteil 48 zumindest in längsaxialer Richtung (bezüglich einer Längsachse 56 des Ansaugstutzens 42, die koaxial (oder zumindest parallel) zu einer Rotationsachse 58 des Verdichterlaufrads 34 ausgerichtet ist). Der ringförmig umlaufende Grundkörper des Wirkabschnitts 52 weist im Längsschnitt eine keilförmige Schnittfläche auf, so dass sich der von dem Absatzbauteil 48 begrenzte Strömungsquerschnitt bezüglich der Betriebsströmungsrichtung 36 eines mittels des Verdichters 16 zu verdichtenden (Frisch-)Gases bis zum Erreichen der den Umfangsabsatz 50 ausbildenden Stirnfläche des Wirkabschnitts 52 kontinuierlich verengt. Diese kontinuierliche Verengung des von dem Absatzbauteil 48 begrenzten Strömungsquerschnitts verhindert im Wesentlichen eine negative Beeinflussung einer Strömung des (Frisch-)Gases in der Betriebsströmungsrichtung 36. Die den Umfangsabsatz 50 ausbildende Stirnfläche des Wirkabschnitts 52 ist dagegen in einem Winkel von ca. 90° zu dem sich an diese Stirnfläche direkt anschließenden Abschnitt der den Niederdruckraum 38 begrenzenden Wand des Ansaugstutzens 42 ausgerichtet.

Der von dem Absatzbauteil 48 ausgebildete, dem Verdichterlaufrad 34 zugewandte und parallel zu einer Eintrittsebene 74 des Verdichterlaufrads ausgerichtete Umfangsabsatz 50 stellt einen erheblichen Strömungswiderstand für eine in der Fig. 3 vereinfacht dargestellte wandnahe Drallströmung 60 dar, die eine der Betriebsströmungsrichtung 36 des zu verdichtenden Frischgases entgegengesetzte Bewegungskomponente 62 aufweist. Diese Drallströmung 60 stellt eine Rückströmung bereits verdichteten Frischgases aus dem Hochdruckraum 40 über das Verdichterlaufrad 34 in den Niederdruckraum 38 dar, die sich ohne den erfindungsgemäß vorgesehenen Umfangsabsatz 50 in einem relevanten Ausmaß bis in das Gasführungsrohr 46 fortsetzen würde und infolge seiner im Vergleich zu dem Ansaugstutzen 42 des Verdichtergehäuses 32 dünnwandigeren Ausgestaltung (und gegebenenfalls der Ausgestaltung des Gasführungsrohrs 46 aus einem Kunststoff anstelle eines Metalls bei dem Verdichtergehäuse 32) zu erheblichen Schwingungsanregung, teilweise im Bereich der Eigenfrequenzen, der Wand des Gasführungsrohrs 46 führen würde. Daraus würde nicht nur eine direkte Abstrahlung von Luftschall 80 über die Ansaugmündung 76 sondern auch von Körperschall 82 über die Gasführungsrohre des Ansaugabschnitts des Frischgasstrangs bewirken, wie dies in der Fig. 1 angedeutet ist. Eine solche rückströmende Drallströmung 60 tritt insbesondere dann auf, wenn nach einem Betrieb der Brennkraftmaschine mit weit geöffneter Drosselklappe 20 diese Drosselklappe 20 relativ schnell (weitgehend oder vollständig) geschlossen wird, was lediglich verzögert zu einer verringerten Drehzahl des Verdichterlaufrads 34 und damit zu einer verringerten Verdichtungsleistung des Verdichters 16 führt. Kurzzeitig fördert das Verdichterlaufrad 34 somit weiterhin mit relativ hoher Förderleistung Frischgas in die sich an den Verdichterauslass anschließende Ladeluftstrecke des Frischgasstrangs, wobei das geförderte Frischgas durch die verschlossene Drosselklappe 20 nicht bis zu dem Verbrennungsmotor 10 geführt werden kann. Somit entsteht eine kurzfristige, ungewöhnlich große Druckerhöhung innerhalb des Hochdruckraums 40 und eine entsprechend große Druckdifferenz im Vergleich zu dem Gasdruck in dem Niederdruckraum 38, die zu einem verstärkten Rückströmen bereits verdichteten Frischgases führt, wobei diese Rückströmung in Form der Drallströmung 60 von dem Verdichterlaufrad 34 abströmt.

Die innerhalb des Ansaugstutzens 42 in Richtung des Verdichtereinlasses 44 strömende Drallströmung 60 trifft auf den von dem Absatzbauteil 48 ausgebildeten Umfangsabsatz 50 und wird dadurch an einem Überströmen in das Gasführungsrohr 46 gestört und dabei zumindest teilweise reflektiert. Auf diese Weise wird eine Schwingungsanregung der Wand des Gasführungsrohrs 46 und damit eine Schallerzeugung reduziert.

In den Niederdruckraum des Verdichters 16 mündet in radialer Richtung ein Anschluss, über den Kurbelwellenraumgase (Blow-by-Gase), die zur Vermeidung der Erzeugung eines Überdrucks in einem Kurbelwellenraum des Verbrennungsmotors 10 aus diesen abgesaugt werden, nach einer Reinigung (insbesondere Entölung und gegebenenfalls auch Filterung) in den Frischgasstrang eingebracht werden können. Es konnte festgestellt werden, dass das Vorsehen des Umfangsabsatzes 50 in dem Ansaugabschnitt des Verdichters 16 und die dadurch bewirkte Störung der rückströmenden Drallströmung 60 eine Rückführung von Kurbelwellenraumgas nicht in einem relevanten Ausmaß negativ beeinflusst.

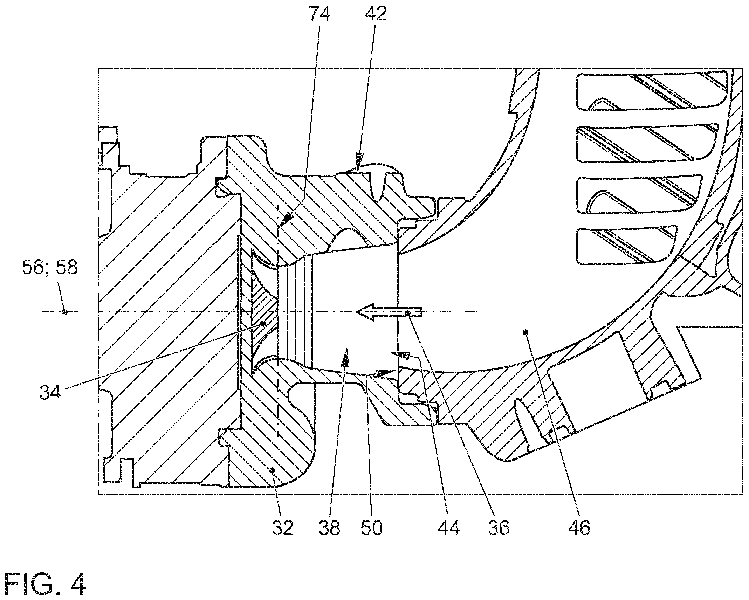

Die in der Fig. 4 dargestellte Ausgestaltung eines erfindungsgemäßen Verdichters 16 unterscheidet sich von derjenigen der Fig. 3 im Wesentlichen darin, dass der Umfangsabsatz 50 nicht von einem separaten Absatzbauteil 48 sondern von dem Übergang zwischen dem Ansaugstutzen 42 und dem Gasführungsrohr 46 selbst ausgebildet ist. Hierzu weist das diesen Übergang ausbildende Ende des Gasführungsrohrs 46 einen entsprechend kleineren Strömungsquerschnitt als der Verdichtereinlass 44 auf, so dass der Umfangsabsatz 50 von der entsprechenden Stirnwand des Gasführungsrohrs 46 ausgebildet ist.

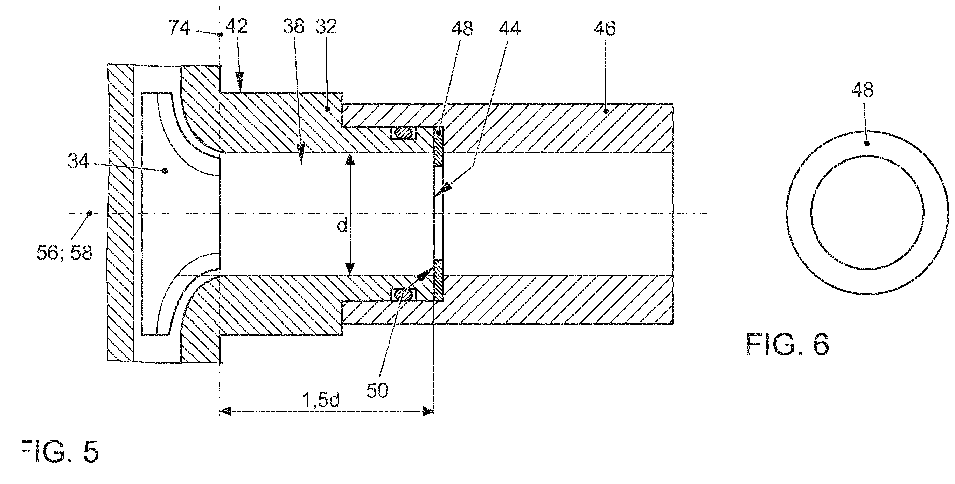

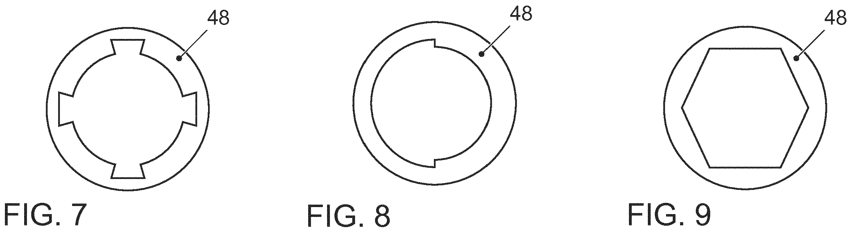

Bei der Ausgestaltung eines erfindungsgemäßen Verdichters 16 gemäß der Fig. 5 ist der Umfangsabsatz 50 wiederum von einem innerhalb des Übergangs zwischen dem Ansaugstutzen 42 des Verdichtergehäuses 32 und dem Gasführungsrohr 46 angeordneten separaten Absatzbauteil 48 ausgebildet, wobei das Absatzbauteil 48 beispielsweise in Form eines einfachen ebenen Rings mit konstantem Innen- und Außendurchmesser (vgl. Fig. 6) ausgebildet sein kann. Alternativ dazu kann das ringförmige Absatzbauteil 48 auch mit in Umfangsrichtung unkonstantem Innendurchmesser ausgebildet sein, wie dies beispielhaft für verschiedene Ausgestaltungen in den Fig. 7 bis 9 dargestellt ist. Aufgrund dieser unkonstanten Innendurchmesser ergibt sich über dem Umfang jeweils eine unkonstante Absatzhöhe (d.h. radiale Erstreckung derjenigen Stirnfläche des jeweiligen Absatzbauteils 48, die den dem Verdichterlaufrad zugewandten Umfangsabsatz 50 ausbildet).

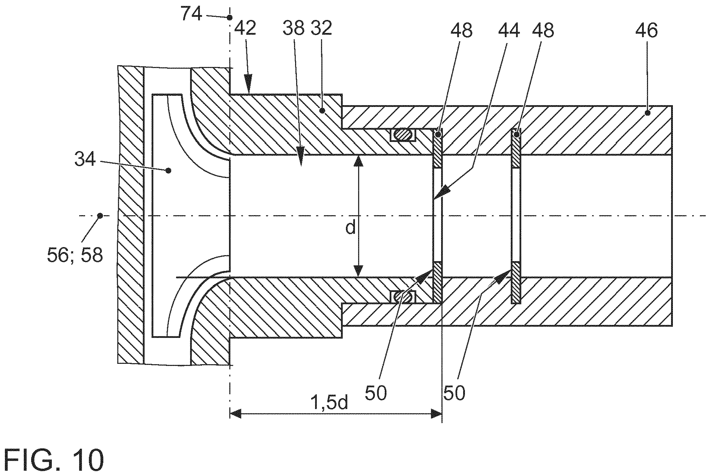

Die Ausgestaltung eines erfindungsgemäßen Verdichters 16 gemäß der Fig. 10 unterscheidet sich von derjenigen gemäß der Fig. 5 insbesondere darin, dass neben dem in dem Übergang zwischen dem Ansaugstutzen 42 und dem Gasführungsrohr 46 angeordneten, einen ersten Umfangsabsatz 50 ausbildenden Absatzbauteil 48 ein weiteres ringförmiges Absatzbauteil 48 innerhalb des Gasführungsrohrs 46 angeordnet und in diesem beispielsweise durch die Aufnahme in einer umlaufenden Nut fixiert ist. Dieses weitere Absatzbauteil 48 bildet einen zweiten, dem Verdichterlaufrad 34 zugewandten Umfangsabsatz 50 aus. Durch die kombinierte Wirkung beider Umfangsabsätze 50 kann gegebenenfalls eine Ausbreitung einer rückströmenden Drallströmung 60 besonders wirkungsvoll verhindert oder gestört werden. Die Ausgestaltung der beiden Absatzbauteile 48 kann dabei beliebig, beispielsweise entsprechend den Fig. 6 bis 9 sein.

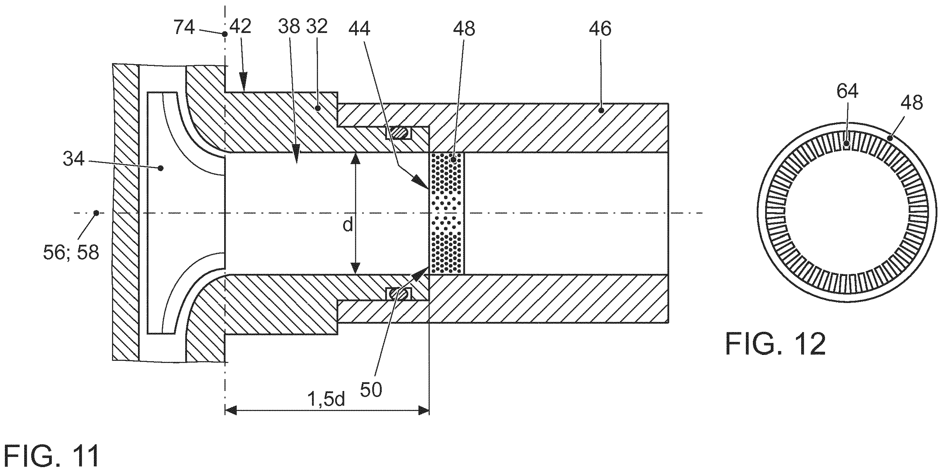

In der Ausgestaltung eines erfindungsgemäßen Verdichters 16 gemäß den Fig. 11 und 12 wird von einem Absatzbauteil 48, das in der Nähe des Übergangs zwischen dem Ansaugstutzen 42 und dem Gasführungsrohr 46 angeordnet ist, ein segmentierter Umfangsabsatz 50 ausgebildet, indem eine Vielzahl von auf einem umlaufenden Streifen angeordnete, stabförmige und sich radial bezüglich der Längsachse des Ansaugstutzens 42 erstreckende Elemente 64 vorgesehen sind. Die kürzeste Distanz zwischen den einzelnen stabförmigen Elementen 64 und dem Verdichterlaufrad 34 ist für einige von diesen unterschiedlich.

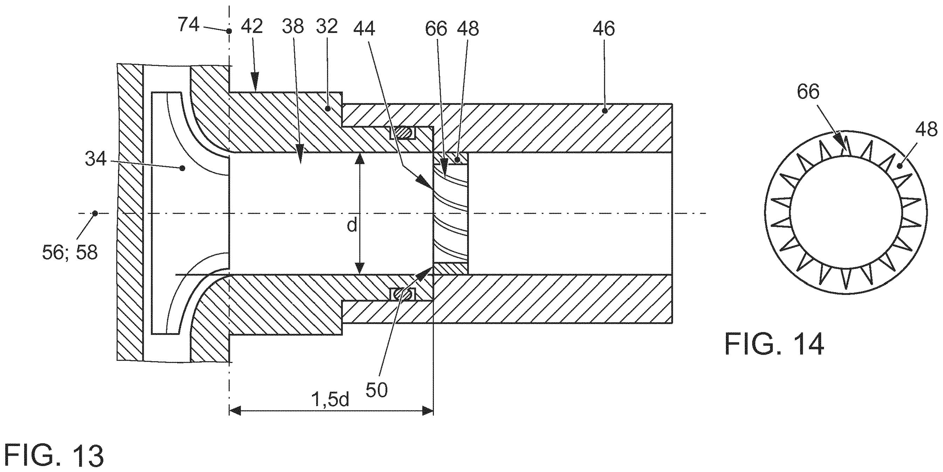

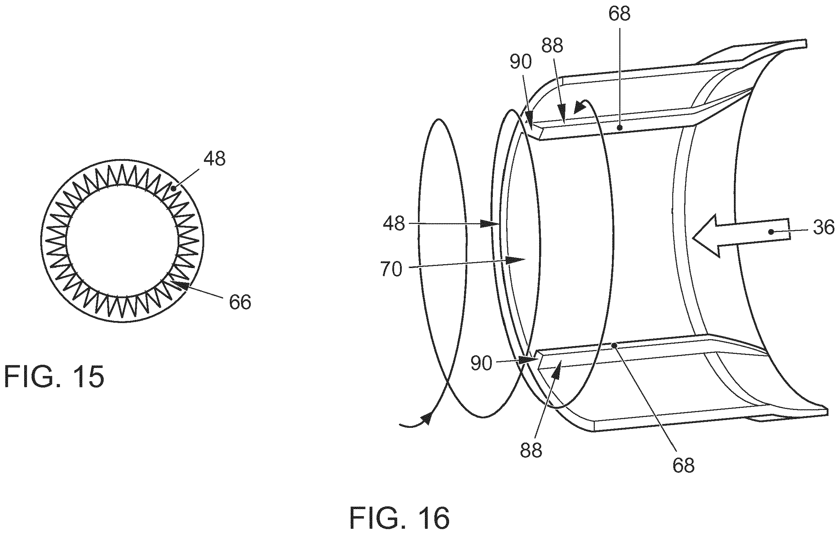

Die Fig. 13 und 14 zeigen noch eine Ausgestaltung eines erfindungsgemäßen Verdichters 16 mit einem einen Umfangsabsatz 50 ausbildenden Absatzbauteil 48, das dadurch gekennzeichnet ist, dass über dessen Umfang verteilt gekrümmt (bezüglich einer Längsachse des Absatzbauteils 48) verlaufende Vertiefungen 66 (mit V-förmigem Querschnitt), die sich über die gesamte längsaxiale dieses Absatzbauteils 48 erstrecken, in dieses eingebracht sind. Diese Vertiefungen 66 können dazu dienen, in eine durch das Absatzbauteil 48 hindurch geführte Strömung des Frischgases einen Strömungsdrall einzubringen, der sich bei einer Strömung des Frischgases in der Betriebsströmungsrichtung 36 positiv auf die Anströmung des Verdichterlaufrads 34 auswirken kann. Hinsichtlich der zu störenden Drallströmung 60 kann die Ausrichtung der gekrümmt verlaufenden Vertiefungen 66 derart sein, dass diese dem Drall dieser Drallströmung entgegenwirken, wodurch eine hinsichtlich der angestrebten Vermeidung einer Schallerzeugung durch die Drallströmung 60 weiter verbesserte Wirkung des Umfangsabsatzes 50 erreicht werden kann. Die Fig. 15 zeigt noch eine zu dem Absatzbauteil 48 gemäß der Fig. 14 leicht abgewandelte Ausgestaltung, bei der benachbarte Vertiefungen 66 direkt aneinander anschließen.

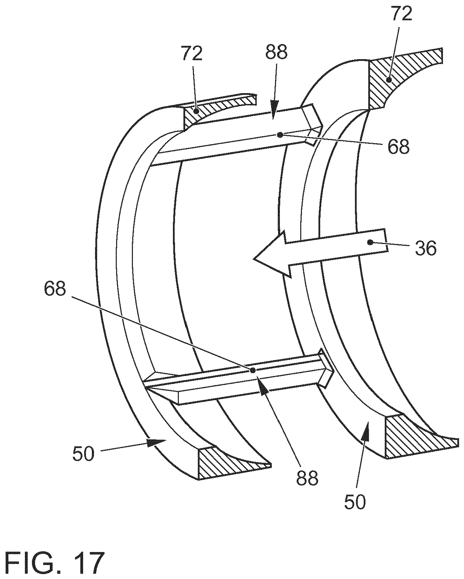

Die Fig. 16 und 17 zeigen weitere Ausgestaltungen von Absatzbauteilen 48, die für die Integration in den Ansaugabschnitt eines erfindungsgemäßen Verdichters 16 vorgesehen sein können. Diese Ausgestaltungen sind dadurch gekennzeichnet, dass Längsabsätze 88 ausgebildet sind, die senkrecht zu der Eintrittsebene 74 eines dazugehörigen Verdichterlaufrads 34 und somit auch parallel zur Längsachse 56 des Ansaugabschnitts ausgerichtet sind.

Bei dem Absatzbauteil 48 gemäß der Fig. 16 werden diese senkrecht zu der Eintrittsebene 74 des Verdichterlaufrads 34 ausgerichteten Längsabsätze 88 von in Längsrichtung des Ansaugabschnitts verlaufenden Stegen 68, die in einen rohrförmigen Wandteil 70 des Absatzbauteils 48 integriert sind, ausgebildet. Dabei sind die Stege 68 in gleichmäßiger Teilung über dem Umfang des Wandteils 70 verteilt angeordnet. Die dem Verdichterlaufrad 34 zugewandten Enden (Stirnflächen 90) dieser Stege 68 bilden grundsätzlich einen zu der Eintrittsebene 74 des Verdichterlaufrads 34 parallel ausgerichteten, segmentierten Umfangsabsatz 50 aus. Aufgrund der relativ kleinen (Flächen-)Größe dieses Umfangsabsatzes 50 weist dieser jedoch nur eine relativ geringe, gegebenenfalls keine nachweisbare Störungswirkung für die rückströmende Drallströmung 60 auf. Aus diesem Grund sollten die von den Stegen 68 ausgebildeten Längsabsätze 88 noch mit einem (in der Fig. 16 nicht dargestellten) ausreichend großen (zusätzlichen) Umfangsabsatz 50 kombiniert werden. Die anderen Enden der Stege 68 sind kontinuierlich in Richtung des rohrförmigen Wandteils 70 des Absatzbauteils 48 auslaufend und somit absatzfrei ausgebildet sind, um eine Strömung des Frischgases in der Betriebsströmungsrichtung 36 möglichst wenig zu beeinflussen.

Von dem Absatzbauteil 48 gemäß der Fig. 17 werden sowohl zwei parallel als auch mehrere senkrecht bezüglich der Eintrittsebene 74 eines dazugehörigen Verdichterlaufrads 34 ausgerichtete Absätze 50 ausgebildet, wobei die parallel ausgerichteten und geschlossen umlaufenden Absätze 50 von zwei Absatzringen 72 und die senkrecht ausgerichteten Absätze 50 von mehreren die Absatzringe 50 miteinander verbindenden Stegen 68 ausgebildet sind. Auf der von dem Verdichterlaufrad 34 abgewandten Seite sind die Absatzringe 72 in etwa konisch aufweitend (entgegen der Betriebsströmungsrichtung 36) ausgebildet, wodurch der durch die Absatzringe 72 erzeugte Strömungswiderstand für in Betriebsströmungsrichtung strömendes Gas relativ gering gehalten werden soll.

Um eine rückströmende Drallströmung 60 möglichst wirkungsvoll zu stören, sollten die Stege 68 möglichst nah an dem Verdichterlaufrad 34 positioniert sein. Beispielsweise kann der (kürzeste) Abstand zwischen dem Verdichterlaufrad 34 und einem diesem zugewandten Ende eines der Stege 68 maximal 60 mm betragen. Gegebenenfalls kann auch ein Mindestwert für diesen Abstand sinnvoll sein, der beispielsweise bei 10 mm liegen kann. Die Anzahl der über einem Umfang des Ansaugabschnitts verteilten Stege 68 kann beispielsweise zwischen eins und sechs betragen.

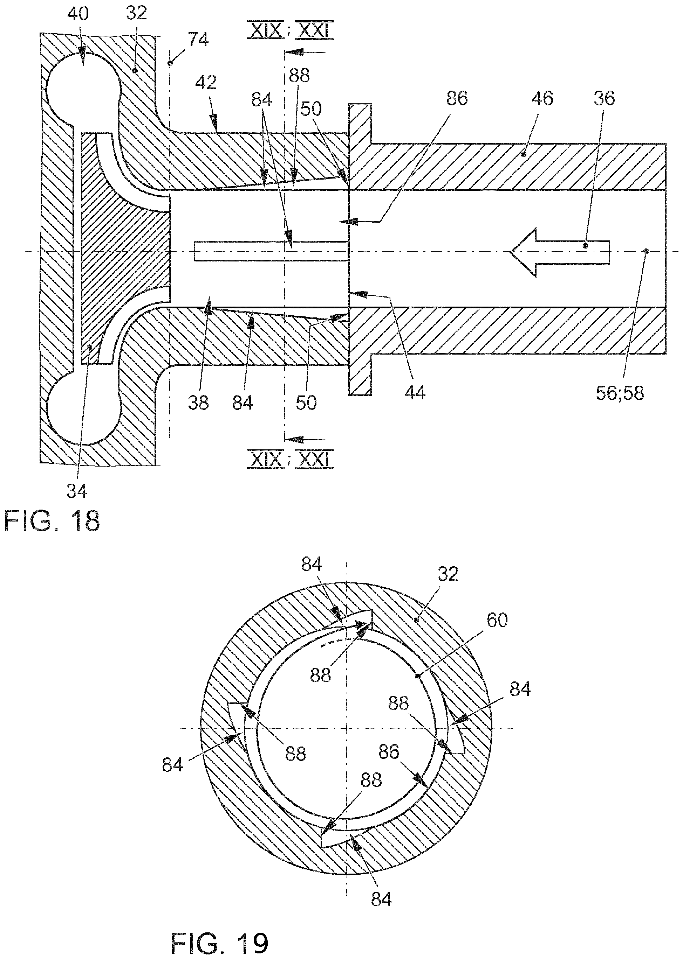

Die Fig. 18 bis 21 zeigen eine weitere mögliche Ausgestaltung eines erfindungsgemäßen Verdichters 16, der senkrecht zu der Eintrittsebene 74 des Verdichterlaufrads 34 ausgerichtete Längsabsätze 88 aufweist. Die Längsabsätze 88 stellen hierbei Abschnitte der Begrenzungsflächen von in das Verdichtergehäuse 32 im Bereich des Ansaugstutzens 42 integrierte, in Richtung der Längsachse 56 verlaufende Vertiefungen 84 (bezogen auf eine einen kreisförmigen Querschnitt definierende Grundfläche 86 der den Niederdruckraum 38 begrenzenden Wand des Ansaugstutzens 42) dar.

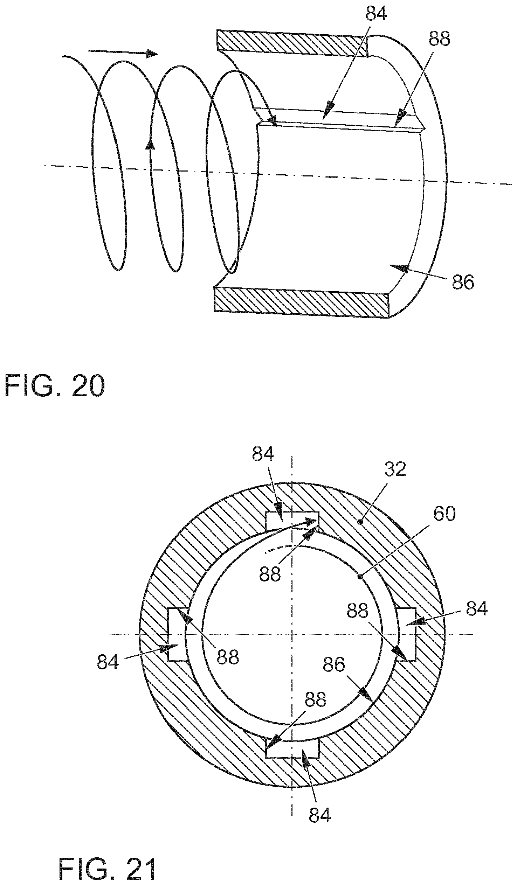

Die von diesen Vertiefungen 84 begrenzten Querschnittsflächen können beispielsweise halbsichelförmig (vgl. Fig. 19 und 20) oder rechteckig (vgl. Fig. 21) ausgebildet sein. Bei den halbsichelförmigen Vertiefungen 84 sollten diese derart in die Wand des Ansaugabschnitts 42 integriert sein, dass sich diese in Richtung der (Haupt-)Drallrichtung der Drallströmung 60 zunehmend vertiefen.

Beispielsweise können zwischen einer und sechs solcher Vertiefungen 84 in die Wand des Ansaugabschnitts 42 integriert sein. Die Absatzhöhe kann dabei beispielsweise zwischen 1 mm und 5 mm betragen. Die Länge der Vertiefungen 84 (in Richtung der Längsachse 56) kann beispielsweise zwischen 5 mm und 55 mm betragen. Vorzugsweise ist vorgesehen, dass die Vertiefungen 84 in Richtung der Betriebsströmungsrichtung 36 kontinuierlich flacher werden und absatzfrei in die Grundfläche 86 der Wand des Ansaugstutzens 42 übergehen.

Die bezüglich des Verdichterlaufrads 34 distalen Enden der Vertiefungen 84 stellen Umfangsabsätze 50 beziehungsweise einen segmentierten Umfangsabsatz 50 dar. In Abhängigkeit von der Anzahl und den Abmessungen der Vertiefungen 84, kann die addierte Umfangslänge dieses Umfangsabsatzes 50 im Vergleich zu dem entsprechenden Gesamtumfang des Ansaugabschnitts jedoch relativ klein sein, so dass auch bei dieser Ausgestaltung eine Kombination mit einem zusätzlichen Umfangsabsatz 50 (nicht dargestellt) sinnvoll sein kann.

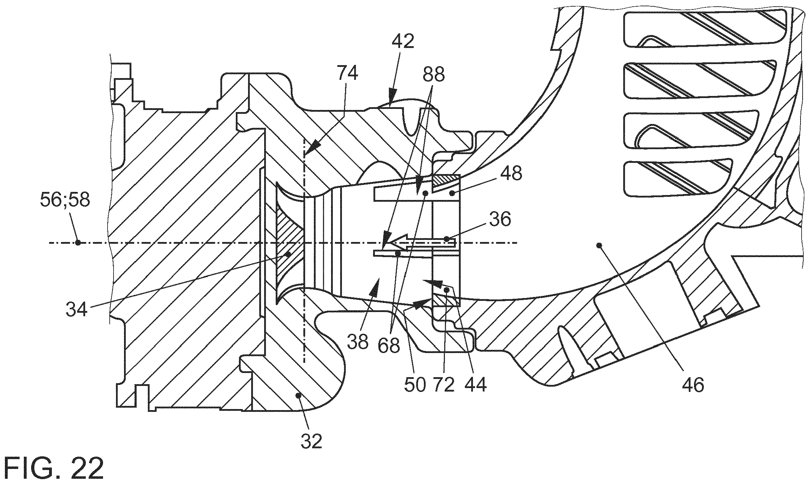

Die Fig. 22 zeigt eine weitere mögliche Ausgestaltung eines erfindungsgemäßen Verdichters 16. Bei diesem ist ein Absatzbauteil 48 vorgesehen, das einen geschlossen umlaufenden Umfangsabsatz 50 mit einer Mehrzahl (konkret vier in einer gleichmäßigen Teilung von 90°) von Stegen 68, die sich ausgehend von dem bezüglich des Verdichterlaufrads 34 distalen Ende von einem den Umfangsabsatz 50 ausbildenden Absatzring 72 in Richtung des Verdichterlaufrads 34 erstrecken, kombiniert. Die Stege 68 bilden jeweils einen Längsabsatz 88 aus.

### Bezugszeichenliste

- 10: Verbrennungsmotor
- 12: Zylinder
- 14: Kurbelwelle
- 16: Verdichter
- 18: Ladeluftkühler
- 20: Drosselklappe
- 22: Turbine
- 24: Welle
- 26: Wastegate
- 28: Riementrieb
- 30: Verdichterbypass
- 32: Verdichtergehäuse
- 34: Verdichterlaufrad
- 36: Betriebsströmungsrichtung
- 38: Niederdruckraum
- 40: Hochdruckraum
- 42: Ansaugstutzen
- 44: Verdichtereinlass
- 46: Gasführungsrohr
- 48: Absatzbauteil
- 50: Umfangsabsatz
- 52: Wirkabschnitt des Absatzbauteils
- 54: Befestigungsabschnitt des Absatzbauteils
- 56: Längsachse des Ansaugstutzens
- 58: Rotationsachse des Verdichterlaufrads
- 60: Drallströmung
- 62: Bewegungskomponente der Drallströmung
- 64: stabförmiges Element
- 66: Vertiefung
- 68: Steg
- 70: Wandteil
- 72: Absatzring
- 74: Eintrittsebene des Verdichterlaufrads
- 76: Ansaugmündung
- 78: Luftfilter
- 80: Luftschall
- 82: Körperschall
- 84: Vertiefung
- 86: Grundfläche
- 88: Längsabsatz
- 90: Stirnfläche

## Patentansprüche

1. Verdichter (16) für eine Brennkraftmaschine mit einem in einem Verdichtergehäuse (32) drehbar gelagerten Verdichterlaufrad (34) und einem in Betriebsströmungsrichtung (36) eines zu verdichtenden Gases vor dem Verdichterlaufrad (34) liegenden Ansaugabschnitt, wobei in eine den Ansaugabschnitt begrenzende Wand ein dem Verdichterlaufrad (34) zugewandter, mündungsfreier Umfangsabsatz (50) integriert ist und das Verhältnis des kürzesten Abstands zwischen dem Verdichterlaufrad (34) und dem Umfangsabsatz (50) einerseits und der größten Querschnittsabmessung in dem von dem Umfangsabsatz (50) begrenzten Strömungsquerschnitt andererseits mindestens 0,5 beträgt, **dadurch gekennzeichnet, dass** der Umfangsabsatz (50) durchgehend oder segmentiert umlaufend ausgebildet ist, wobei bei einem segmentiert umlaufenden Umfangsabsatz (50) die Umfangslänge aller Segmente mindestens 50% des entsprechenden Gesamtumfangs innerhalb des Ansaugabschnitts beträgt.

2. Verdichter (16) gemäß Anspruch 1, **dadurch gekennzeichnet, dass** ein Übergang von dem Umfangsabsatz (50) in den von dem Verdichterlaufrad (34) abgewandten Abschnitt der Wand absatzfrei ausgebildet ist.

3. Verdichter (16) gemäß einem der vorhergehenden Ansprüche, **dadurch gekennzeichnet, dass** zusätzlich ein senkrecht zu einer Eintrittsebene (74) des Verdichterlaufrads (34) ausgerichteter Längsabsatz (88) vorgesehen ist.

4. Verdichter (16) gemäß einem der vorhergehenden Ansprüche, **dadurch gekennzeichnet, dass** der Umfangsabsatz (50) und/oder der Längsabsatz (88) in einem von dem Verdichtergehäuse (32) ausgebildeten Ansaugstutzen (42) oder in einem an den Ansaugstutzen (42) angeschlossenen Gasführungsrohr (46) angeordnet oder in dem Übergang zwischen dem Ansaugstutzen (42) und dem Gasführungsrohr (46) angeordnet oder von diesem Übergang ausgebildet ist.

5. Verdichter (16) gemäß einem der vorhergehenden Ansprüche, **dadurch gekennzeichnet, dass** der Umfangsabsatz (50) und/oder der Längsabsatz (88) von einem separaten Absatzbauteil (48) ausgebildet ist/sind.

6. Verdichter (16) gemäß Anspruch 5, **dadurch gekennzeichnet, dass** das Absatzbauteil (48) aus einem elastischen Werkstoff ausgebildet ist.

7. Verdichter (16) gemäß Anspruch 6, **dadurch gekennzeichnet, dass** das Absatzbauteil (48) derart ausgebildet ist, dass der von dem Umfangsabsatz (50) und/oder dem Längsabsatz (88) begrenzte Strömungsquerschnitt bei einer Beaufschlagung mit dem Gas in Betriebsströmungsrichtung (36) aufweitbar ist.

8. Verdichter (16) gemäß einem der vorhergehenden Ansprüche, **dadurch gekennzeichnet, dass** das Verhältnis des kürzesten Abstands zwischen dem Verdichterlaufrad (34) und dem Umfangsabsatz (50) und/oder dem Längsabsatz (88) einerseits und der größten Querschnittsabmessung in dem von dem Umfangsabsatz (50) und/oder dem Längsabsatz (88) begrenzten Strömungsquerschnitt andererseits zwischen 0,5 und 1,5, vorzugsweise zwischen 0,8 und 1,2 und besonders bevorzugt in etwa 1 beträgt.

9. Verdichter (16) gemäß einem der vorhergehenden Ansprüche, **dadurch gekennzeichnet, dass** das Verhältnis der Absatzhöhe zu der größten Querschnittsabmessung in dem von dem Umfangsabsatz (50) und/oder dem Längsabsatz (88) begrenzten Strömungsquerschnitt zwischen 0,03 und 0,16, vorzugsweise zwischen 0,04 und 0,12 und besonders bevorzugt zwischen 0,05 und 0,08 beträgt.

10. Verdichter (16) gemäß einem der vorhergehenden Ansprüche, **dadurch gekennzeichnet, dass** der Absatzwinkel des Umfangsabsatzes (50) und/oder des Längsabsatzes zwischen 80° und 100°, vorzugsweise ca. 90° beträgt.

11. Abgasturbolader mit einem Verdichter (16) gemäß einem der vorhergehenden Ansprüche und einer Turbine (22).

12. Brennkraftmaschine mit einem einen oder mehrere Brennräume ausbildenden Verbrennungsmotor (10), einem Frischgasstrang, über den den Brennräumen Frischgas zuführbar ist, einem Abgasstrang, über den Abgas aus den Brennräumen abführbar ist und einem Verdichter (16) gemäß einem der Ansprüche 1 bis 10 oder einem Abgasturbolader (22) gemäß Anspruch 11 wobei der Verdichter (16) in den Frischgasstrang integriert ist.

## Claims

1. A compressor (16) for an internal combustion engine having a compressor impeller (34) mounted rotatably in a compressor housing (32) and an intake section situated upstream of the compressor impeller (34) in an operational flow direction (36) of a gas to be compressed, wherein a circumferential shoulder (50), which faces toward the compressor impeller (34) and which does not have a mouth is integrated into a wall which delimits the intake section and the ratio of the shortest distance between the compressor impeller (34) and the circumferential shoulder (50), on the one hand, and the largest cross-sectional dimension in the flow cross section delimited by the circumferential shoulder (50), on the other hand, amounts to at least 0.5, **characterized in that** the circumferential shoulder (50) is formed circumferentially continuous or segmented, wherein in the case of a circumferentially segmented circumferential shoulder (50) the circumferential length of all segments is at least 50% of the corresponding total circumference within the intake section.

2. The compressor (16) according to Claim 1, **characterized in that** a transition from the circumferential shoulder (50) into the section of the wall facing away from the compressor impeller (34) is formed without a shoulder.

3. The compressor (16) according to any one of the preceding claims, **characterized in that** in addition a longitudinal shoulder (88) aligned perpendicular to an entry plane (74) of the compressor impeller (34) is provided.

4. The compressor (16) according to any one of the preceding claims, **characterized in that** the circumferential shoulder (50) and/or the longitudinal shoulder (88) is arranged in a suction intake connection piece (42) formed by the compressor housing (32) or in a gas-conducting pipe (46) connected to the suction intake connection piece (42) or is arranged in the transition between the suction intake connection piece (42) and the gas-conducting pipe (46) or is formed by this transition.

5. The compressor (16) according to any one of the preceding claims, **characterized in that** the circumferential shoulder (50) and/or the longitudinal shoulder (88) is/are formed by a separate shoulder component (48).

6. The compressor (16) according to Claim 5, **characterized in that** the shoulder component (48) is formed from an elastic material.

7. The compressor (16) according to Claim 6, **characterized in that** the shoulder component (48) is formed in such a manner that the flow cross-section delimited by the circumferential shoulder (50) and/or the longitudinal shoulder (88) can be expanded when subjected to the gas in the operating flow direction (36).

8. The compressor (16) according to any one of the preceding claims, **characterized in that** the ratio of the shortest distance between the compressor impeller (34) and the circumferential shoulder (50) and/or the longitudinal shoulder (88), on the one hand, and the largest cross-section dimension in the flow cross-section delimited by the circumferential shoulder (50) and/or the longitudinal shoulder (88), on the other hand, is between 0.5 and 1.5, preferably between 0.8 and 1.2 and particularly preferably approximately 1.

9. The compressor (16) according to any one of the preceding claims, **characterized in that** the ratio of the shoulder height to the largest cross-section dimension in the flow cross-section delimited by the circumferential shoulder (50) and/or the longitudinal shoulder (88) is between 0.03 and 0.16, preferably between 0.04 and 0.12 and particularly preferably between 0.05 and 0.08.

10. The compressor (16) according to any one of the preceding claims, **characterized in that** the shoulder angle of the circumferential shoulder (50) and/or the longitudinal shoulder is between 80° and 100°, preferably approx. 90°.

11. An exhaust gas turbocharger with a compressor (16) according to any one of the preceding claims and a turbine (22).

12. An internal combustion engine having a combustion engine (10) forming one or several combustion chambers, a fresh gas track, via which the combustion chambers can be fed fresh gas, an exhaust gas track, via which exhaust gas can be discharged from the combustion chambers and a compressor (16) according to any one of Claims 1 to 10 or an exhaust gas turbocharger (22) according to Claim 11, wherein the compressor (16) is integrated into the fresh gas track..

## Revendications

1. Compresseur (16) pour une machine à combustion interne, avec une roue de compresseur (34) logée de manière rotative dans un carter de compresseur (32) et une portion d'aspiration se trouvant, dans la direction d'écoulement de fonctionnement (36) d'un gaz à comprimer, avant la roue de compresseur (34), moyennant quoi, dans une paroi délimitant la portion d'aspiration, est intégré un épaulement circonférentiel (50) sans embouchure, orienté vers la roue de compresseur (34) et le rapport entre la distance la plus courte entre la roue de compresseur (34) et l'épaulement circonférentiel (50) d'une part et la dimension de section transversale la plus grande dans la section d'écoulement délimitée par l'épaulement circonférentiel (50) d'autre part est d'au moins 0,5, **caractérisé en ce que** l'épaulement circonférentiel (50) est conçu de manière continue ou segmentée, moyennant quoi, dans un épaulement circonférentiel (50) s'étendant de manière segmentée, la longueur circonférentielle de tous les segments représente au moins 50 % de la circonférence totale correspondant à l'intérieur de la portion d'aspiration.

2. Compresseur (16) selon la revendication 1, **caractérisé en ce qu'**une transition entre l'épaulement circonférentiel (50) et la portion, opposée à la roue de compresseur (34), de la paroi est conçue sans épaulement.

3. Compresseur (16) selon l'une des revendications précédentes, **caractérisé en ce que**, en outre, un épaulement longitudinal (88), orienté perpendiculairement à un plan d'entrée (74) de la roue de compresseur (34), est prévu.

4. Compresseur (16) selon l'une des revendications précédentes, **caractérisé en ce que** l'épaulement circonférentiel (50) et/ou l'épaulement longitudinal (88) est disposé dans un embout d'aspiration (42) formé par le carter de compresseur (32) ou dans un tube de guidage de gaz (46) raccordé à l'embout d'aspiration (42) ou disposé dans la transition entre l'embout d'aspiration (42) et le tube de guidage de gaz (46) ou formé par cette transition.

5. Compresseur (16) selon l'une des revendications précédentes, **caractérisé en ce que** l'épaulement circonférentiel (50) et/ou l'épaulement longitudinal (88) est/sont constitué(s) d'un composant d'épaulement (48) séparé.

6. Compresseur (16) selon la revendication 5, **caractérisé en ce que** le composant d'épaulement (48) est constitué d'un matériau élastique.

7. Compresseur (16) selon la revendication 6, **caractérisé en ce que** le composant d'épaulement (48) est conçu de façon à ce que la section d'écoulement délimitée par l'épaulement circonférentiel (50) et/ou l'épaulement longitudinal (88) puisse être élargie lors d'une sollicitation avec le gaz dans la direction d'écoulement de fonctionnement (36).

8. Compresseur (16) selon l'une des revendications précédentes, **caractérisé en ce que** le rapport entre la distance la plus courte entre la roue de compresseur (34) et l'épaulement circonférentiel (50) et/ou l'épaulement longitudinal (88) d'une part et la dimension de section transversale la plus grande dans la section d'écoulement délimitée par l'épaulement circonférentiel (50) et/ou l'épaulement longitudinal (88) d'autre part est entre 0,5 et 1,5, de préférence entre 0,8 et 1,2 et plus particulièrement d'environ 1.

9. Compresseur (16) selon l'une des revendications précédentes, **caractérisé en ce que** le rapport entre la hauteur d'épaulement et la dimension de section transversale la plus grande dans la section d'écoulement délimitée par l'épaulement circonférentiel (50) et/ou l'épaulement longitudinal (88) est entre 0,03 et 0,16, de préférence entre 0,04 et 0,12 et plus particulièrement entre 0,05 et 0,08.

10. Compresseur (16) selon l'une des revendications précédentes, **caractérisé en ce que** l'angle d'épaulement de l'épaulement circonférentiel (50) et/ou de l'épaulement longitudinal est entre 80° et 100°, de préférence d'environ 90°.

11. Turbocompresseur à gaz d'échappement avec un compresseur (16) selon l'une des revendications précédentes et une turbine (22).

12. Machine à combustion interne avec un moteur à combustion (10) formant une ou plusieurs chambres de combustion, un trajet de gaz frais, par l'intermédiaire duquel du gaz frais peut être introduit dans les chambres de combustion, un trajet de gaz d'échappement par l'intermédiaire duquel les gaz d'échappement peuvent être évacués hors des chambres de combustion et un compresseur (16) selon l'une des revendications 1 à 10 ou un turbocompresseur (22) selon la revendication 11, le compresseur (10) étant intégré dans le trajet de gaz frais.
